# FASCICULE DE BREVET EUROPEEN

(11) **EP 3 071 442 B1**
(45) Date de publication et mention de la délivrance du brevet: **20.02.2019**
(21) Numéro de dépôt: 14793237.0
(22) Date de dépôt: 06.10.2014
(51) Int. Cl.: B60L 15/20, B60L 11/18, B60L 11/12

(54) **PROCÉDÉ D'ÉLABORATION D'UN COUPLE DE CONSIGNE D'UN MOTEUR ÉLECTRIQUE DE VÉHICULE AUTOMOBILE ET GROUPE MOTOPROPULSEUR ASSOCIÉ**
VERFAHREN ZUR ENTWICKLUNG EINES NENNDREHMOMENTS EINES ELEKTROMOTORS EINES KRAFTFAHRZEUGS UND ZUGEHÖRIGER ANTRIEBSSTRANG
METHOD FOR DEVELOPING A NOMINAL TORQUE OF AN ELECTRIC ENGINE OF A MOTOR VEHICLE, AND ASSOCIATED POWER TRAIN

(30) Priorité: 19.11.2013 FR 1361341
(43) Date de publication de la demande: 28.09.2016
(73) Titulaire: Renault S.A.S., 92100 Boulogne-Billancourt (FR)
(72) Inventeur: FONTVIEILLE, Laurent, F-91190 Gif Sur Yvette (FR); BUIS, Emmanuel, F-91330 Verrieres Le Buisson (FR)
(86) Numéro de dépôt international: PCT/FR2014/052519
(87) Numéro de publication internationale: WO 2015/075334

(56) Documents cités:
- FR-A1- 2 970 682
- US-A- 5 746 282
- US-A1- 2010 244 755
- US-A1- 2012 235 612
- US-A1- 2013 218 393

## Description

L'invention a pour objet les systèmes de contrôle de groupes motopropulseurs électriques qu'il est possible de trouver sur des véhicules automobiles électriques ou hybrides. Un système de contrôle moteur comprend notamment un ensemble de capteurs, et comprend une ou plusieurs unités de commande électroniques.

Sur un véhicule électrique ou hybride, le contrôle moteur permet d'interpréter la volonté du conducteur, traduite par exemple par des signaux de pédale d'accélération et de frein, en consigne de couple moteur positif ou négatif, qui correspond au couple aux roues souhaité par le conducteur.

La consigne de couple moteur, avant d'être envoyée vers le moteur, ou d'être convertie en plusieurs consignes distinctes à destination de chacun des moteurs du véhicule en vue de répartir la force de traction totale du véhicule entre les moteurs, peut être soumise à différents filtrages numériques ou analogiques, et peut être modifiée dans certains cas particuliers, pour répondre à diverses stratégies d'optimisation du fonctionnement du véhicule. Elle est ensuite transmise à un système d'électronique de puissance (comprenant par exemple un onduleur et un hacheur) qui assure en fonction des valeurs de consignes, une alimentation électrique (tension et courant) permettant d'obtenir le fonctionnement souhaité du moteur. Le système électronique de puissance alimente les différentes bobines du moteur électrique de manière à permettre de convertir la puissance électrique disponible sur le véhicule en puissance mécanique, qui est ensuite transmise aux roues du véhicule par l'intermédiaire d'un éventuel système réducteur.

On désigne par « chaîne de traction » l'ensemble d'organes électromécaniques qui assurent la transmission du couple du moteur aux roues du véhicule. On peut, par convention, inclure dans cet ensemble un système permettant de transformer la consigne à la pédale d'accélération ou la consigne à la pédale de frein, en signal électrique alimentant le moteur. Le système électrique et/ou mécanique reliant la pédale d'accélération à l'électronique d'alimentation du moteur, ainsi que le système de transmission physique du couple entre le moteur et les roues du véhicule sont sujets à des inerties, à des temps de réaction et, surtout pour la partie mécanique, à des frottements qui peuvent provoquer des retards d'exécution du couple souhaité aux roues, voire provoquer des à-coups en termes de couple de propulsion du véhicule.

Dans le cas particulier où un véhicule est mû au moins partiellement par un moteur électrique, et lorsque le véhicule se déplace sur une chaussée en pente, on peut se trouver dans des configurations où le moteur électrique, tout en délivrant un couple de signe constant, vient à changer de sens de rotation en fonction de l'intensité d'appui du pied du conducteur sur la pédale d'accélération ou sur la pédale de frein.

Or lorsque le moteur ralentit pour changer de sens de rotation, le moteur, comme la chaîne de traction associée, se trouvent soumis à des forces de frottements dits « frottements secs ». La valeur de ces frottements secs varie brutalement lorsque les vitesses relatives de certaines pièces mécaniques passent sous un seuil de vitesse, seuil qui est spécifique à chaque couple de pièces et à ses états de surface.

Il en résulte des discontinuités de l'accélération angulaire du moteur, donc des discontinuités du couple transmis aux roues, qui peuvent être source d'inconfort pour le conducteur du véhicule et les passagers du véhicule.

Des solutions de contrôle moteur ont été envisagées pour tenter de compenser les effets de frottement sec.

Ainsi, dans la demande de brevet US 6 876 910, on propose de compenser un couple de frottement sec dans un système de direction assistée électriquement. On effectue à cette fin une estimation du frottement sec, par un calcul en boucle ouverte à partir de la consigne de couple initiale. On utilise cette estimation du couple de frottement sec pour établir une valeur de correction de la consigne de courant de l'actionneur électrique. Une telle méthode nécessite de connaître une loi d'évolution fiable des frottements secs en fonction du couple développé par le moteur. Une telle méthode en boucle ouverte n'est utilisable que lorsque les frottements secs prédominants peuvent être parfaitement modélisés. Or les valeurs de coefficients de frottement peuvent varier non seulement en fonction des vitesses relatives des pièces en contact, mais également en fonction de leur usure, de leur température, de l'humidité ambiante, et surtout peuvent varier d'un véhicule à l'autre en fonction des tolérances de fabrication.

Une autre demande de brevet US 4 995 478 propose d'effectuer une compensation de couple de frottement sec pour une commande d'un ascenseur. Au moment du démarrage de la cabine, une correction de couple, qui est fonction du sens de déplacement de la cabine et de la charge de la cabine, est ajoutée au couple de consigne permettant de contrôler le système.

Là aussi, la compensation se fait à partir d'un calcul en boucle ouverte de forces de frottement, et est tributaire des lois de comportement souvent très approximatives de la tribologie.

Le document US2012235612 concerne un dispositif de contrôle de moteur électrique pour un véhicule électrique, dans lequel on ajoute à la consigne de couple moteur un terme permettant de compenser les phénomènes de résonance dans le véhicule causés par les oscillations de couple moteur.

Le document US2013218393 améliore la sensation de conduite en marche arrière pour un véhicule électrique en ajoutant une correction de couple à la consigne de couple pour des vitesses négatives.

Le document US2010244755 décrit un système de contrôle pour machine électrique dans lequel on ajoute un terme correctif à la consigne de couple afin de réduire les ondulations de couple.

Le document US5746282 décrit un système de contrôle moteur pour un chariot de manutention, compensant les forces de friction par ajout à la puissance de propulsion d'une puissance de compensation de friction fonction de la masse du chariot.

Le document FR2970682 décrit un procédé de diminution de l'amplitude d'une consigne de récupération d'énergie au freinage autour de la fréquence de résonance de la chaîne de transmission de couple d'un véhicule.

L'invention a pour but de proposer un dispositif de contrôle moteur qui permette de limiter, ou d'éviter, les à-coups de couple aux roues liés au phénomène de frottement sec. Ce système de contrôle doit être économique, c'est-à-dire doit utiliser les capteurs déjà présents pour d'autres applications, de manière standard sur un véhicule, doit être stable dans le temps, c'est-à-dire doit rester efficace au cours de la vie du véhicule malgré les phénomènes d'usure des pièces, qui modifient sensiblement les coefficients de frottement entrant en jeu, et doit être applicable à un grand nombre de véhicules du même modèle de fabrication, sans nécessiter d'effectuer un calibrage du système de contrôle véhicule par véhicule, pour compenser les dispersions dimensionnelles de fabrication du véhicule.

A cette fin, l'invention propose un procédé d'élaboration d'un couple de consigne d'un moteur électrique de véhicule automobile électrique ou hybride selon la revendication 1. On calcule une première consigne de couple à partir d'un signal de pédale d'accélération du véhicule automobile, et on ajoute à cette première consigne de couple un incrément correctif quand le régime de rotation du moteur électrique est inférieur en valeur absolue à un premier seuil de régime de rotation. Le signal de pédale d'accélération peut être calculé à partir de plusieurs signaux de plusieurs éléments d'interface homme machine actionnables par le conducteur du véhicule, par exemple une pédale d'accélération et une pédale de frein. Une pédale peut être remplacée par une manette ou par tout autre dispositif permettant de transmettre une consigne de valeur graduée. On ajoute à la première consigne de couple un incrément correctif non nul uniquement quand le régime de rotation est inférieur en valeur absolue à un premier seuil de régime de rotation. L'ajout de l'incrément correctif ne se fait que tant que le régime de rotation reste compris entre une borne minimale qui est inférieure à zéro et une borne maximale qui est supérieure à zéro. Le moteur est commandé par une valeur finale de consigne de couple incluant l'incrément correctif si celui-ci est appliqué.

Avantageusement, on impose un incrément correctif négatif si le dernier franchissement du premier seuil de rotation a eu lieu pour une valeur positive de régime de rotation du moteur, et on impose un incrément correctif positif si le dernier franchissement du premier seuil de rotation a eu lieu pour une valeur négative de régime de rotation du moteur. Bien sûr, suivant les conventions de signe adoptées, on peut obtenir un procédé équivalent en imposant systématiquement un incrément correctif positif si le dernier franchissement du premier seuil de rotation a eu lieu pour une valeur négative de régime de rotation du moteur, et en imposant un incrément correctif négatif si le dernier franchissement du premier seuil de rotation a eu lieu pour une valeur positive de régime de rotation du moteur.

Pour les vitesses de rotation de valeur absolue inférieure au premier seuil, on peut imposer une valeur d'incrément correctif dont la valeur absolue est une fonction strictement croissante de la valeur absolue de la première consigne de couple.

Selon un mode de réalisation préféré, on calcule une réponse fréquentielle en fonction du régime de rotation du moteur, on additionne cette réponse fréquentielle à la première consigne de couple, et, quand le régime de rotation est inférieur en valeur absolue au premier seuil de régime de rotation, avant d'additionner la réponse fréquentielle, on lui applique un coefficient multiplicateur amplifiant l'effet de la réponse fréquentielle. Le coefficient multiplicateur est appliqué à la réponse fréquentielle avant d'ajouter la réponse fréquentielle à la consigne calculée à partir du signal de la pédale d'accélération.

Selon les variantes de réalisation, on n'applique pas de coefficient multiplicateur, ou on applique un coefficient multiplicateur constant, quand la valeur absolue du régime de rotation est supérieure à un second seuil. Le second seuil peut être égal au premier seuil. Selon un mode de réalisation préféré, le coefficient multiplicateur est égal à 1 quand la valeur absolue du régime de rotation est supérieure au second seuil, et le coefficient multiplicateur est strictement supérieur à 1 quand le régime de rotation est inférieur en valeur absolue au premier seuil. Selon un mode de réalisation avantageux, le rapport entre la valeur maximale du coefficient multiplicateur, et la valeur du coefficient multiplicateur quand la valeur absolue du régime de rotation est supérieure au second seuil, est compris entre 1.5 et 10, et de préférence compris entre 2 et 6. Le premier seuil peut être différent du second seuil, si par exemple on commence à imposer un coefficient multiplicateur supérieur à un, pour deux valeurs de valeurs absolues différentes de part et d'autre de zéro.

Selon un mode de réalisation préféré, le coefficient multiplicateur à régime nul de rotation du moteur électrique, est croissant en valeur absolue avec la valeur absolue de la première consigne de couple. De manière préférentielle, le coefficient multiplicateur est strictement croissant en valeur absolue avec la valeur absolue de la première consigne de couple.

Selon une variante de réalisation, le coefficient multiplicateur à régime donné pour une valeur de régime distincte de zéro mais de valeur absolue inférieure au premier seuil de régime de rotation, est également croissant, et de préférence strictement croissant, en valeur absolue, avec la valeur absolue de la première consigne de couple.

Selon un mode de réalisation avantageux, le coefficient multiplicateur à régime nul croît en valeur absolue de manière linéaire avec la valeur absolue de la première consigne de couple. Selon une variante de réalisation, le coefficient multiplicateur à régime donné pour une valeur de régime distincte de zéro mais de valeur absolue inférieure au premier seuil de régime de rotation, croît également de manière linéaire en valeur absolue avec la valeur absolue de la première consigne de couple.

Selon un mode de réalisation préférentiel, le coefficient multiplicateur appliqué à la réponse fréquentielle reste de signe constant indépendamment du signe du régime de rotation du moteur électrique au moment du dernier franchissement du premier seuil de rotation.

L'invention propose aussi un groupe motopropulseur pour véhicule à propulsion électrique ou hybride selon la revendication 4.

L'unité de commande peut être en outre configurée pour calculer une réponse fréquentielle en fonction du régime de rotation du moteur, être configurée pour additionner cette réponse fréquentielle à la première consigne de couple, et pour appliquer un coefficient multiplicateur amplifiant l'effet de la réponse fréquentielle quand le régime de rotation est inférieur en valeur absolue au premier seuil de régime de rotation.

D'autres buts, caractéristiques et avantages de l'invention apparaîtront à la lecture de la description suivante donnée uniquement à titre d'exemple non limitatif, et faite en référence aux dessins annexés, sur lesquels :
- la figure 1 est une représentation schématique d'un véhicule utilisant un système de contrôle moteur selon l'invention,
- la figure 2 est une illustration schématique à l'aide de courbes simplifiées montrant les discontinuités de comportement d'un véhicule liées au phénomène de frottement sec,
- la figure 3 est une représentation schématique à l'aide de courbes simplifiées montrant le comportement d'un véhicule selon l'invention,
- la figure 4 est un algorithme simplifié de fonctionnement d'un système de compensation de frottements secs intégré à un système de contrôle moteur selon l'invention,
- la figure 5 est un schéma de fonctionnement simplifié d'un système de contrôle moteur dont la configuration peut être adaptée pour obtenir un système de contrôle moteur amélioré selon l'invention,
- la figure 6 est un schéma de fonctionnement simplifié d'un système de contrôle moteur selon l'invention.

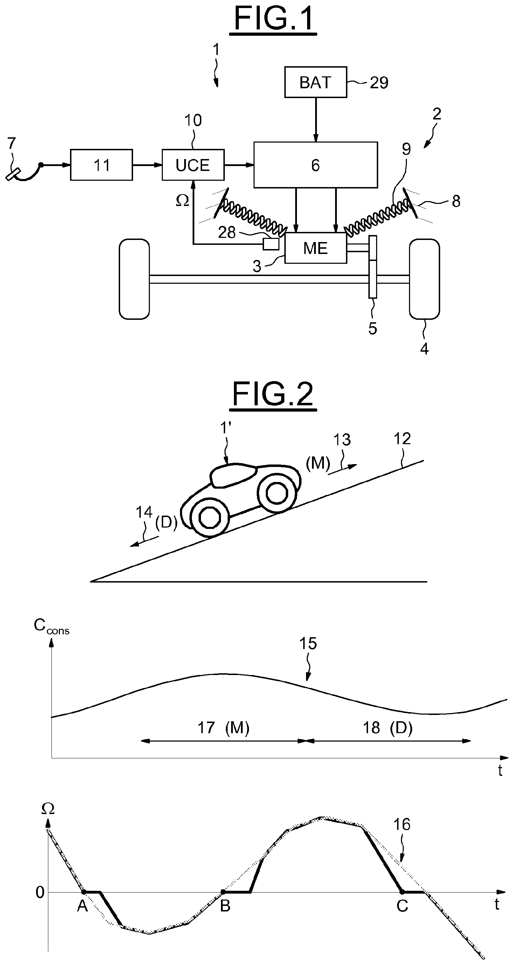

Tel qu'illustré sur la figure 1, un véhicule automobile 1 à propulsion électrique ou hybride, comprend un groupe motopropulseur 2. Le groupe motopropulseur 2 comprend un moteur électrique 3, assemblé au châssis 8 du véhicule par un système de suspension 9 et comprend des batteries d'accumulation électrique 29 alimentant le moteur électrique 3 au travers d'un système d'électronique de puissance 6. Le moteur électrique 3 est relié à des roues motrices 4 du véhicule par une chaîne de transmission 5 comprenant notamment des coupleurs et réducteurs permettant de transmettre le couple du moteur aux roues.

Le système d'électronique de puissance 6 est commandé par une unité de commande électronique 10 et permet de convertir une consigne de couple aux roues émanant de l'unité de commande électronique 10, en une alimentation adéquate en courant électrique du moteur électrique 3 à partir des batteries 29.

L'unité de commande électronique 10 est reliée à un détecteur de position des bobinages du moteur électrique 28, qui transmet à l'unité de commande électronique 10 une valeur Ω de vitesse de rotation du moteur électrique 3. L'unité de commande électronique 10 reçoit une première consigne de couple C_{cons} émanant d'une unité d'élaboration de consigne de couple 11, recevant elle-même un signal d'une pédale d'accélération 7 du véhicule.

L'unité d'élaboration de consigne de couple 11 peut également être reliée à une pédale de frein (non représentée) du véhicule, et peut être configurée pour définir la première consigne de couple en fonction, à la fois de la position de la pédale d'accélération, de la position de la pédale de frein, et d'autres éléments du contexte de roulage du véhicule, tels que par exemple une position de levier de boîte de vitesses.

La première consigne de couple délivrée par l'unité 11 traduit, en première approche le souhait du conducteur en termes de couple aux roues demandé au véhicule.

L'unité de commande électronique 10 peut superposer à cette première consigne de couple, différentes stratégies d'optimisation du roulage du véhicule, par exemple différents types de filtrages pour éviter des à-coups du véhicule, ou encore une répartition du couple demandé entre un moteur électrique et un moteur thermique du véhicule, notamment si le véhicule est un véhicule de type hybride.

La figure 2 illustre de manière simplifiée les répercussions au niveau de la vitesse de rotation Ω du moteur 3 -qui se répercute sur la vitesse de rotation des roues du véhicule- des frottements secs qui se produisent lors des phases d'annulation de la vitesse de rotation Ω du moteur électrique 3 de la figure 1.

Sur la figure 2, un véhicule 1' non équipé de l'invention est représenté sur une chaussée en pente 12 sur laquelle il peut se déplacer soit en avançant dans une direction ascendante 13, soit à reculons dans une direction descendante 14. La figure 2 montre une courbe 15 de variations possibles d'un couple de consigne émanant d'une pédale d'accélération du véhicule 1'. Sur l'exemple illustré en figure 2, cette première consigne de couple C_{cons} est constamment positive, elle augmente dans un premier temps pendant une période 17 (phase de montée "M"), passe par un maximum, puis diminue pendant une période de temps 18 (phase descente "D") et passe par un minimum.

Sur le deuxième graphe 16 de la figure 2, une courbe en trait plein illustre les variations mesurées de vitesse de rotation Ω du moteur.

Dans l'exemple illustré, à l'instant t=0, la vitesse du moteur 3 est positive, c'est-à-dire que le véhicule 1' commence à monter la pente 12. Puis le couple appliqué par le moteur et transmis aux roues diminue et devient insuffisant pour contrer l'effet du poids du véhicule. La vitesse de rotation Ω du moteur décroît vers 0 pour atteindre une vitesse nulle à un instant A. A cet instant A, la vitesse de rotation étant nulle, le moteur est soumis à des couples de freinage de frottements secs qui maintiennent quelques instants le moteur immobile, jusqu'à ce que le couple total appliqué au moteur, à la fois du fait de l'alimentation électrique du moteur, et du fait du couple aux roues par le poids du véhicule, parvienne à contrer le couple de frottement sec.

La vitesse Ω du moteur devient alors négative, et le véhicule 1' se met à reculer. Pendant ce temps, le couple de consigne C_{_cons} imposé par le signal de la pédale d'accélération continue à augmenter, ce qui ralentit la marche arrière du véhicule, puis à immobiliser celui-ci à un instant B. La vitesse du moteur passant alors de nouveau par 0, les couples de frottement sec nécessitent que soit appliqué un surcroît de couple moteur pour provoquer à nouveau une vitesse de déplacement positive, c'est-à-dire dans le sens de la montée 13 du véhicule 1'. La vitesse du véhicule et la vitesse de rotation du moteur continuent ensuite à augmenter, pendant que le conducteur 'lève le pied', provoquant une diminution du couple de consigne à la pédale, pendant un intervalle de temps noté 18 sur la figure 2. La vitesse du véhicule et la vitesse de rotation du moteur redécroissent ensuite, du fait de cette diminution du couple de consigne à la pédale. La vitesse de rotation du moteur passe à nouveau par 0 à un instant C, et les couples de frottement provoquent à nouveau un retard au mouvement vers l'arrière du véhicule du fait des frottements secs, de manière similaire au phénomène décrit pour l'instant A. La courbe mesurée de vitesse de rotation du moteur du véhicule 1' correspond à la courbe en trait plein, et présente, au moment des passages par 0 de la vitesse de rotation Ω, c'est-à-dire lors des instants repérés A, B, C, des plateaux à vitesse nulle succédant à des variations de vitesses à pente non nulle.

Cette courbe en trait plein montre que les occupants du véhicule subissent des à-coups d'accélération au moment des passages par 0 de la vitesse de rotation du moteur.

Sur le graphe 16, la courbe en pointillés illustre des variations souhaitées de vitesse de rotation Ω du moteur, qui permettrait aux occupants du véhicule de percevoir moins d'à-coups d'accélération que lorsque le moteur décrit la courbe effectivement mesurée.

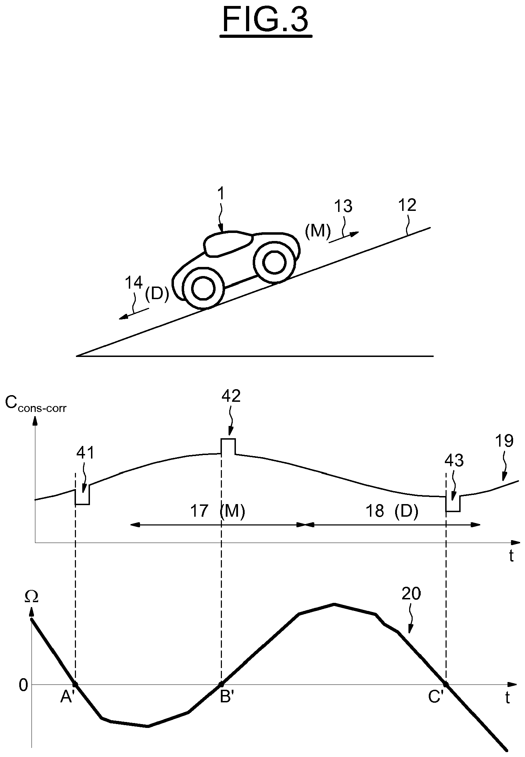

La figure 3 illustre un véhicule 1 électrique équipé d'un système de contrôle d'un groupe motopropulseur selon l'invention, effectuant le même type de manoeuvre que le véhicule 1' précédent sur la même chaussée en pente 12. On retrouve sur la figure 3 des notations communes à la figure 2, les mêmes éléments étant désignés par les mêmes références. Le moteur électrique du véhicule est cette fois piloté au moyen d'une consigne de couple corrigée C_{cons_corr} représentée sur le graphe 19 de la figure 3. La courbe résultante de vitesse de rotation du moteur électrique 3 du véhicule est représentée sur le graphe 20 de la figure 3. En fonction de l'équilibre qui s'établit entre le couple appliqué par le moteur au niveau des roues et le couple aux roues du poids du véhicule, la vitesse de rotation des roues et la vitesse de rotation du moteur -qui lui est proportionnelle dans le cas d'un véhicule électrique- passent toutes deux par 0 en trois instants repérés par les lettres A', B' et C' sur le graphe 20.

Au moment A' où la vitesse de rotation du moteur se rapproche de la valeur nulle par valeur supérieure, on impose à la valeur C_{cons_corr} correspondant à la courbe 19, une diminution soudaine et temporaire de valeur en dessous du tracé moyen de la courbe, de manière à accentuer temporairement le déséquilibre des forces s'appliquant sur le véhicule en faveur du poids du véhicule, et de manière à effectuer une transition vers des vitesses négatives de rotation du moteur sans créer de discontinuité de l'accélération angulaire du moteur ni de discontinuité de l'accélération linéaire du véhicule.

De manière similaire, lorsque la vitesse de rotation du moteur arrive à la valeur nulle par valeur inférieure à l'instant B', on applique par rapport à la courbe moyenne de variation de couple 19 un surcroît temporaire de couple de consigne 42. La vitesse de rotation du moteur peut ainsi passer vers les valeurs positives sans discontinuité de l'accélération angulaire de rotation du moteur. Lorsqu'enfin la vitesse de rotation du moteur revient vers la valeur nulle par valeur supérieure au point C', on applique à nouveau une diminution temporaire du couple de consigne repéré par l'incrément 43 qui est similaire à l'incrément 41 que l'on a imposé à l'instant A' et qui permet à nouveau d'effectuer une transition vers les vitesses de rotation négatives du moteur sans provoquer d'à-coups d'accélération linéaires du véhicule.

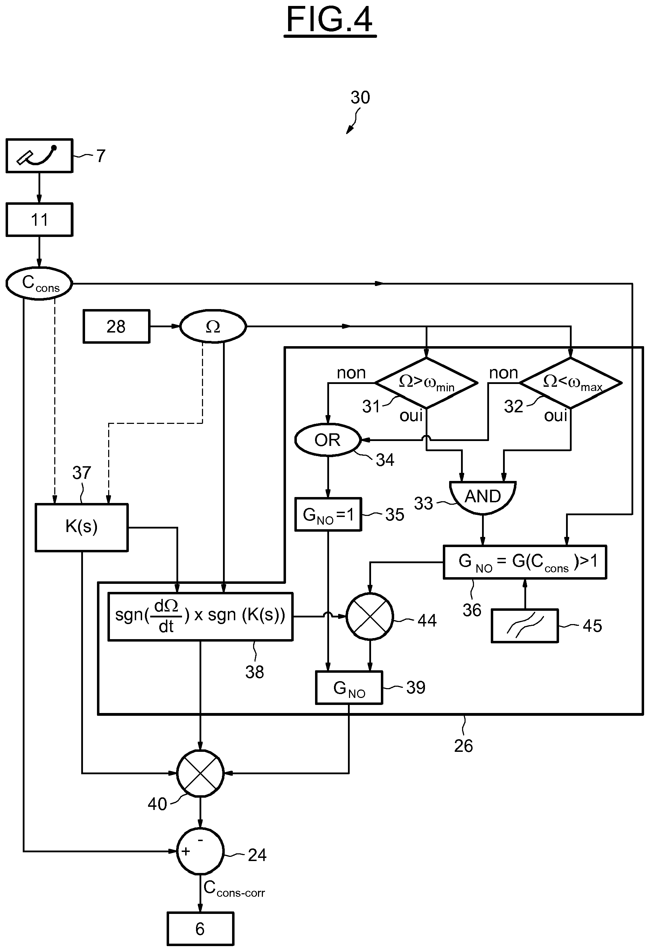

La figure 4 illustre un algorithme simplifié 30 d'un procédé selon l'invention permettant de limiter ou d'éviter des discontinuités d'accélération angulaire du moteur du véhicule lors des passages par la vitesse angulaire nulle de la vitesse de rotation du moteur.

On retrouve sur la figure 4 des références communes aux figures précédentes, les mêmes éléments étant désignés par les mêmes références.

Le détecteur de position 28 du moteur électrique 3 de la figure 1 émet une valeur Ω de vitesse ou de rotation du moteur.

A une étape 31, on effectue un test pour voir si cette vitesse de rotation Ω est supérieure à une valeur minimale ωₘᵢₙ. A une étape 32, on effectue un test pour voir si cette vitesse de rotation Ω est inférieure à une valeur minimale ωₘₐₓ.

Les résultats des tests 31 et 32 peuvent, par exemple sous forme booléenne, être envoyés sur un multiplicateur logique « AND » 33. Si le résultat du multiplicateur logique 33 est positif, à une étape 36 on calcule un coefficient multiplicateur G_{N0} qui est fonction du couple de consigne C_{cons} délivré par l'unité d'élaboration de couple 11 à partir de la consigne de la pédale d'accélération 7. Ce coefficient multiplicateur G_{N0} est strictement supérieur à 1 et est croissant avec la valeur absolue du couple C_{cons} de consigne initiale, car ce couple C_{cons} traduit au voisinage des vitesses nulles de rotation du moteur, le couple que doit contrer le véhicule pour rester immobile sur une chaussée en pente.

Si l'un des résultats des tests 31 ou 32 est négatif, ce qui correspond par exemple sur l'algorithme 30 à un résultat positif d'une somme logique obtenue par un sommateur 34 "OR" sur lequel sont envoyées les valeurs logiques contraires des résultats des tests 31 et 32, alors, à une étape 35, on affecte à la valeur de coefficient multiplicateur G_{N0} la valeur 1.

A une étape 39, la valeur stockée dans la mémoire G_{N0} est envoyée sur un multiplicateur 40.

Le multiplicateur 40 reçoit sur une autre entrée une fonction 37 représentée ici par K(s) qui peut être une fonction en réponse fréquentielle calculée soit à partir de la consigne de couple initiale C_{cons}, soit à partir de la vitesse de rotation Ω, soit à partir des deux valeurs. La fonction 37 peut être par exemple obtenue par un filtrage fréquentiel à partir de la valeur C_{cons} et de la vitesse de rotation Ω ou encore à partir d'un seul filtrage fréquentiel de la vitesse de rotation du moteur Ω.

Au niveau d'un soustracteur 24, la sortie du multiplicateur 40 peut être soustraite -ou additionnée, suivant les conventions de signe retenues- à la valeur initiale de consigne C_{cons} initialement calculée par l'unité 11 à partir de la position de la pédale d'accélération 7. La sortie du soustracteur 24 délivre une valeur C_{cons_corr} qui est envoyée au système d'électronique de puissance 6 pour obtenir une vitesse de rotation du moteur répondant aux desiderata du conducteur et ne présentant pas de discontinuité d'accélération angulaire lors des passages par 0.

Suivant les variantes de réalisation, et suivant la fonction 37 utilisée, la valeur du multiplicateur G_{N0} est multipliée au niveau d'un second multiplicateur 44, par une valeur signée 38 égale à +1 ou égale à -1, préalablement à son envoi 39 sur le multiplicateur 40. On choisit la valeur de signature égale à +1 ou à -1 de manière à ce que l'incrément de consigne de couple ajouté ou soustrait à la consigne de couple initiale C_{cons} tende effectivement à accélérer le passage de la vitesse de rotation par 0.

A titre d'exemple, la valeur de signature peut être obtenue en multipliant le signe de la dérivée de la vitesse de rotation Ω par le signe courant de la fonction K(s), ou, suivant les variantes de réalisation, à l'opposé de cette valeur.

Le coefficient multiplicateur calculé à l'étape 36 peut, comme dans le mode de réalisation de la figure 4 être une valeur qui est fonction du premier couple de consigne, cette valeur étant indépendante de la vitesse de rotation Ω une fois que celle-ci a été détectée comme étant comprise entre une borne minimale ωₘᵢₙ, et une borne maximale ωₘₐₓ. Cette valeur peut par exemple être enregistrée dans une cartographie 45 fonction du premier couple de consigne C_{cons}.

Selon d'autres modes de réalisation, la valeur envoyée à l'étape 39 peut provenir d'un tableau à double entrée en fonction à la fois de la vitesse de rotation Ω du moteur et de la première consigne de couple C_{cons} comme illustré par exemple dans le tableau 1 ci-dessous, sans test préalable pour savoir si la vitesse Ω est proche ou non de zéro.

**Tableau 1**

| | | Régime moteur (tours/min) | | | | |
|---|---|---|---|---|---|---|
| | | -500 | -5 | 0 | 5 | 500 |
| Consigne de couple moteur (Nm) | -200 | 1 | 1 | 4 | 1 | 1 |
| | -100 | 1 | 1 | 2 | 1 | 1 |
| | 0 | 1 | 1 | 1 | 1 | 1 |
| | 100 | 1 | 1 | 2 | 1 | 1 |
| | 200 | 1 | 1 | 4 | 1 | 1 |

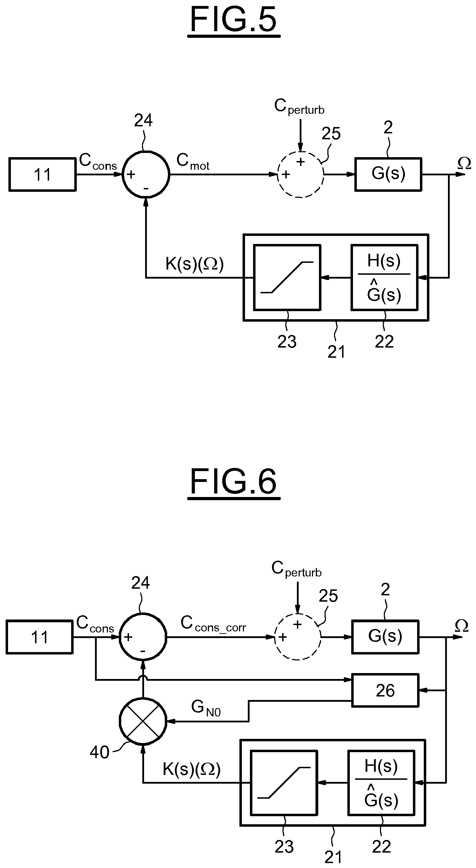

La figure 5 illustre de manière simplifiée un système d'élaboration d'une consigne de couple Cₘₒₜ sur un véhicule automobile de l'art antérieur. Le système de contrôle moteur illustré en figure 5 comprend un filtre de réponse fréquentielle 21 qui analyse le signal de vitesse de rotation moteur Ω en lui appliquant une fonction de transfert 22 représentée ici comme un quotient de la première fonction de transfert H par une fonction de transfert *Ĝ* qui est une estimation du comportement physique G du groupe motopropulseur 2 du véhicule.

Dans l'exemple illustré, un filtre passe-haut 23 est appliqué à la suite de la fonction de transfert 22, et le résultat de l'application successive de la fonction de transfert 22 et du filtre passe-haut 23 est renvoyé sous forme d'une fonction K(s) sur un soustracteur 24 où le résultat du filtre de réponse fréquentielle 21 est soustrait à la consigne initiale C_{cons} délivrée par une unité d'élaboration de première consigne de couple à partir d'un signal de pédale d'accélération. Sur la figure 5, on a représenté en pointillés un sommateur 25 qui représente l'addition, en termes de comportement physique, de différentes perturbations de couples qui viennent s'ajouter au couple délivré par le moteur du véhicule en réponse à la consigne de couple Cₘₒₜ.

Le couple résultant du couple produit suite à la consigne Cₘₒₜ, modifié par les couples perturbateurs C_{perturb}, est physiquement converti par le système physique 2 représentant le groupe motopropulseur -et schématisé ici par une fonction physique de transfert G(s)- en une vitesse de rotation Ω, qui peut être mesurée au moyen d'un détecteur 28 de position du moteur électrique. La vitesse de rotation ou régime de rotation Ω et qui est ensuite utilisée pour le calcul du terme correctif K(s) à l'aide du filtre de réponse fréquentielle 21.

On peut considérer que le couple C_{perturb} comprend des termes spécifiques correspondant aux efforts et aux couples de frottement sec, ces couples s'appliquant essentiellement quand la vitesse de rotation Ω est proche de 0.

La figure 6 illustre une adaptation du système de contrôle moteur de la figure 5, qui permet de réduire l'effet des couples perturbateurs liés au phénomène de frottement sec.

Le système de contrôle moteur de la figure 6 reprend des éléments du système de contrôle moteur de la figure 5, les mêmes éléments étant désignés par les mêmes références.

Le système de contrôle moteur de la figure 6 comprend un générateur 26 de coefficient multiplicateur G_{N0} qui peut par exemple effectuer les étapes préalables à l'envoi 39 du coefficient multiplicateur G_{NO} sur la figure 4. Lorsque la vitesse de rotation Ω est proche de la valeur nulle, le générateur 26 délivre un coefficient multiplicateur supérieur à 1, et qui est de préférence croissant avec la valeur absolue du premier couple de consigne C_{cons}. Le générateur 26 délivre le coefficient multiplicateur G_{NO} sur un multiplicateur 40, afin d'amplifier la valeur K(s)(Ω) avant d'envoyer cette valeur corrective sur le soustracteur 24.

Pour certaines fonctions de transfert K(s), il n'est pas nécessaire de remultiplier le coefficient multiplicateur G_{N0} par un signe fonction du signe de la vitesse de rotation Ω, car le signe de la valeur corrective K(s) est déjà orienté de manière à accélérer le franchissement de la valeur nulle par la vitesse de rotation du moteur. Le générateur 46 reçoit donc en entrée à la fois les valeurs mesurées Ω de vitesse de rotation du moteur et la première valeur de consigne C_{cons} délivrée par l'unité d'élaboration 11 interprétant le signal de la pédale d'accélération du véhicule.

Comme on peut le voir dans le tableau 1, les valeurs de régime moteur en valeurs absolues en-dessous desquelles on attribue au coefficient multiplicateur une valeur supérieure à 1, correspondent à des valeurs seuil faibles, ici une valeur de 5 tours/minute, car ce sont les valeurs en deçà desquelles le comportement en frottement se rapproche d'un comportement quasi statique.

Le choix de ces valeurs seuil peut typiquement dépendre de la sensibilité avec laquelle le détecteur 28 de position du moteur électrique est capable de mesurer la vitesse de rotation du moteur.

Le seuil peut dépendre de l'architecture du moteur, de l'ajustement des pièces, du type de lubrifiant utilisé et peut être éventuellement adapté en fonction de la température du moteur et/ou de la température extérieure au véhicule pour tenir compte de la température des pièces de la chaîne de transmission autres que celles directement situées au voisinage du moteur.

Le seuil de vitesse de rotation en deçà duquel le coefficient multiplicateur est pris supérieur à 1 peut être par exemple compris entre 2 et 100 tours/minute, et de préférence compris entre 2 et 10 tours/minute, et si la précision du détecteur 28 le permet entre 2 et 6 tours/minute.

Si le seuil de détection d'une vitesse non nulle par les moyens de quantification de la vitesse de rotation du moteur est supérieur aux valeurs précédentes, on prend comme valeur seuil, pour appliquer à un coefficient multiplicateur supérieur à 1, le seuil de détection du détecteur de vitesse de rotation.

En fonction de la discrétisation des valeurs mesurées de vitesse de rotation, on peut ne pas chercher à déterminer si la vitesse de rotation du moteur est inférieure à un seuil, et appliquer un coefficient multiplicateur supérieur à un si la valeur de vitesse détectée est égale à zéro.

On peut envisager des variantes de réalisation dans lesquelles la précision de détection de la vitesse de rotation du moteur permettrait même d'affecter différentes valeurs de coefficients multiplicateurs pour différentes vitesses de rotation pour une même valeur de premier couple de consigne.

Grâce à l'amplification ponctuelle par le coefficient multiplicateur G_{N0}, au voisinage des vitesses de rotation nulles, on engendre un surcroît ponctuel ou un défaut ponctuel de couple par rapport au couple de consigne qui permet au moteur de franchir la configuration à vitesse nulle sans provoquer d'à-coups d'accélération au niveau du véhicule.

On augmente ainsi le confort du véhicule, par une adaptation du système de contrôle moteur qui est applicable à un grand nombre de véhicules et dont le fonctionnement reste efficace au fur et à mesure de l'usure des pièces du moteur grâce au caractère autoadaptatif de la régulation en boucle fermée du système.

L'invention peut également être appliquée à des systèmes de motorisation hybrides, en raisonnant sur un premier couple de consigne demandé au moteur électrique en fonction à la fois d'une position de pédale d'accélération et/ou de frein, et en fonction des stratégies de répartition de couple entre le moteur thermique et le moteur électrique du véhicule. La vitesse de rotation prise en compte sera bien sûr celle du moteur électrique, qui dans ce cas ne peut se déduire directement de la vitesse de rotation des roues du véhicule.

## Revendications

1. Procédé d'élaboration d'un couple de consigne (C_{cons_corr}) d'un moteur électrique de véhicule automobile (1) électrique ou hybride, dans lequel on calcule une première consigne de couple (C_{cons}) à partir d'un signal de pédale d'accélération (7) du véhicule automobile (1), on calcule une réponse fréquentielle (K(s)) en fonction du régime de rotation (Ω) du moteur, et on additionne cette réponse fréquentielle à la première consigne de couple (C_{cons}), on ajoute à cette première consigne de couple (C_{cons}) un incrément correctif quand le régime de rotation (Ω) du moteur électrique est inférieur en valeur absolue à un premier seuil de régime de rotation en appliquant à la réponse fréquentielle un coefficient multiplicateur (G_{NO}) amplifiant l'effet de ladite réponse fréquentielle (K(s)), **caractérisé en ce que** ledit coefficient multiplicateur (G_{N0}) étant strictement supérieur à 1 et croissant avec la valeur absolue de la première consigne de couple (C_{cons}), et ledit coefficient multiplicateur étant multiplié par une valeur de signature égale à +1 ou à -1 de manière à ce que l'incrément de consigne de couple ajouté ou soustrait à la première consigne de couple (C_{cons}) tende effectivement à accélérer le passage de la vitesse de rotation du moteur par zéro.

2. Procédé d'élaboration d'un couple de consigne selon la revendication 1, dans lequel on impose un incrément correctif négatif si le dernier franchissement du premier seuil de rotation a eu lieu pour une valeur positive de régime de rotation du moteur, et on impose un incrément correctif positif si le dernier franchissement du premier seuil de rotation a eu lieu pour une valeur négative de régime de rotation (Ω) du moteur (1), de manière à ce que le signe de l'incrément de consigne de couple ajouté ou soustrait à la première consigne de couple (C_{cons}) tende à accélérer le passage de la vitesse de rotation par zéro.

3. Procédé de commande d'un moteur électrique de véhicule automobile, dans lequel on élabore un couple de consigne selon l'une quelconque des revendications précédentes, et on commande le moteur par une valeur finale de consigne de couple incluant l'incrément correctif.

4. Groupe motopropulseur (2) pour véhicule (1) à propulsion électrique ou hybride, comprenant un moteur électrique (3) et comprenant une unité de commande (10) configurée pour délivrer un couple de consigne au moteur électrique (3), l'unité de commande étant configurée pour recevoir un signal d'une pédale d'accélération (7), pour recevoir une valeur estimée de régime de rotation (Ω) du moteur électrique (3) et étant configurée pour calculer à partir de ce signal de pédale une première consigne de couple (C_{cons}), dans lequel l'unité de commande (10) est en outre configurée pour calculer une réponse fréquentielle (K(s)) en fonction du régime de rotation (Ω) du moteur, additionner cette réponse fréquentielle à la première consigne de couple (C_{cons}), et, quand le régime de rotation (Ω) est inférieur en valeur absolue à un premier seuil de régime de rotation, avant d'additionner la réponse fréquentielle, pour calculer un incrément correctif en appliquant à la réponse fréquentielle un coefficient multiplicateur (G_{NO}) amplifiant l'effet de la réponse fréquentielle (K(s)), **caractérisé en ce que** ledit coefficient multiplicateur (G_{NO}) étant strictement supérieur à 1 et croissant avec la valeur absolue de la première consigne de couple (C_{cons}), et ledit coefficient multiplicateur étant multiplié par une valeur de signature égale à +1 ou à -1 de manière à ce que l'incrément de consigne de couple ajouté ou soustrait à la première consigne de couple (C_{cons}) tende effectivement à accélérer le passage de la vitesse de rotation du moteur par zéro.

## Patentansprüche

1. Verfahren zur Entwicklung eines Nenndrehmoments (C_{cons_corr}) eines Elektromotors eines Elektro- oder Hybrid-Kraftfahrzeugs (1), bei dem ein erster Drehmomentnennwert (C_{cons}) ausgehend von einem Signal des Gaspedals (7) des Kraftfahrzeugs (1) berechnet wird, ein Frequenzgang (K(s)) in Abhängigkeit von der Drehzahl (Ω) des Motors berechnet wird und dieser Frequenzgang zu dem ersten Drehmomentnennwert (C_{cons}) addiert wird, zu diesem ersten Drehmomentnennwert (C_{cons}) ein korrigierendes Inkrement hinzugefügt wird, wenn die Drehzahl (Ω) des Elektromotors als Absolutwert geringer als eine erste Drehzahlschwelle ist, indem auf den Frequenzgang ein Multiplikationskoeffizient (G_{NO}) angewandt wird, der die Wirkung des Frequenzgangs (K(s)) verstärkt, **dadurch gekennzeichnet, dass** der Multiplikationskoeffizient (G_{N0}) größer als 1 ist und mit dem Absolutwert des ersten Drehmomentnennwerts (C_{cons}) zunimmt und der Multiplikationskoeffizient mit einem Signaturwert gleich +1 oder -1 multipliziert wird, so dass das Drehmomentnennwert-Inkrement, das zu dem ersten Drehmomentnennwert (C_{cons}) hinzugefügt oder davon subtrahiert wird, wirksam dazu tendiert, den Durchgang der Drehgeschwindigkeit des Motors durch null zu beschleunigen.

2. Verfahren zur Entwicklung eines Nenndrehmoments nach Anspruch 1, bei dem ein negatives korrigierendes Inkrement vorgegeben wird, wenn die letzte Überschreitung der ersten Drehzahlschwelle bei einem positiven Wert der Drehzahl des Motors stattfand, und ein positives korrigierendes Inkrement vorgegeben wird, wenn die letzte Überschreitung der ersten Drehzahlschwelle bei einem negativen Wert der Drehzahl (Ω) des Motors (1) stattfand, so dass das Vorzeichen des Drehmomentnennwert-Inkrements, das zu dem ersten Drehmomentnennwert (C_{cons}) hinzugefügt oder davon subtrahiert wird, dazu tendiert, den Durchgang der Drehgeschwindigkeit durch null zu beschleunigen.

3. Verfahren zur Steuerung eines Elektromotors eines Kraftfahrzeugs, bei dem ein Nenndrehmoment nach einem der vorhergehenden Ansprüche entwickelt wird und der Motor durch einen Endwert des Drehmomentnennwerts gesteuert wird, der das korrigierende Inkrement beinhaltet.

4. Antriebsstrang (2) für ein Fahrzeug (1) mit Elektro- oder Hybridantrieb, umfassend einen Elektromotor (3) und umfassend eine Steuereinheit (10), die konfiguriert ist, um ein Nenndrehmoment an den Elektromotor (3) abzugeben, wobei die Steuereinheit konfiguriert ist, um ein Signal eines Gaspedals (7) zu empfangen, um einen Schätzwert der Drehzahl (Ω) des Elektromotors (3) zu empfangen, und konfiguriert ist, um ausgehend von diesem Pedalsignal einen ersten Drehmomentnennwert (C_{cons}) zu berechnen, wobei die Steuereinheit (10) ferner konfiguriert ist, um einen Frequenzgang (K(s)) in Abhängigkeit von der Drehzahl (Ω) des Motors zu berechnen, diesen Frequenzgang zu dem ersten Drehmomentnennwert (C_{cons}) zu addieren und, wenn die Drehzahl (Ω) als Absolutwert geringer als eine erste Drehzahlschwelle ist, vor dem Addieren des Frequenzgangs, um ein korrigierendes Inkrement zu berechnen, indem auf den Frequenzgang ein Multiplikationskoeffizient (G_{NO}) angewandt wird, der die Wirkung des Frequenzgangs (K(s)) verstärkt, **dadurch gekennzeichnet, dass** der Multiplikationskoeffizient (G_{NO}) größer als 1 ist und mit dem Absolutwert des ersten Drehmomentnennwerts (C_{cons}) zunimmt und der Multiplikationskoeffizient mit einem Signaturwert gleich +1 oder -1 multipliziert wird, so dass das Drehmomentnennwert-Inkrement, das zu dem ersten Drehmomentnennwert (C_{cons}) hinzugefügt oder davon subtrahiert wird, wirksam dazu tendiert, den Durchgang der Drehgeschwindigkeit des Motors durch null zu beschleunigen.

## Claims

1. Method for producing a reference torque (C_{cons_corr}) of an electric motor of an electric or hybrid motor vehicle (1), wherein a first reference torque (C_{cons}) is calculated from a signal of the acceleration pedal (7) of the motor vehicle (1), a frequency response (K(s)) is calculated in accordance with the rotation speed (Ω) of the engine, and this frequency response is added to the first reference torque (C_{cons}), there is added to this first reference torque (C_{cons}) a corrective increment when the rotation speed (Ω) of the electric engine is less in terms of an absolute value than a first rotation speed threshold by applying to the frequency response a multiplication coefficient (G_{NO}) which amplifies the effect of the frequency response (K(s)), **characterised in that**
the multiplier coefficient (G_{NO}) is strictly greater than 1 and increases with the absolute value of the first reference torque (C_{cons}), and the multiplier coefficient is multiplied by a signature value which is equal to +1 or -1 so that the reference torque increment added to or subtracted from the first reference torque (C_{cons}) tends effectively to accelerate the passage of the rotation speed of the engine through zero.

2. Method for producing a reference torque according to Claim 1, wherein a negative corrective increment is imposed if the last passing of the first rotation threshold has taken place for a positive rotation speed value of the engine, and a positive corrective increment is imposed if the last passing of the first rotation threshold has taken place for a negative value of the rotation speed (Ω) of the engine (1) so that the sign of the reference torque increment added to or subtracted from the first reference torque (C_{cons}) tends to accelerate the passage of the rotation speed through zero.

3. Method for controlling an electric motor of a motor vehicle, wherein a reference torque is produced in accordance with either of the preceding claims, and the motor is controlled by a reference torque final value which includes the corrective increment.

4. Powertrain (2) for a vehicle (1) with electric or hybrid propulsion, comprising an electric motor (3) and comprising a control unit (10) which is configured to supply a reference torque to the electric motor (3), the control unit being configured to receive a signal from an acceleration pedal (7), in order to receive an estimated value for the rotation speed (Ω) of the electric motor (3) and being configured to calculate from this pedal signal a first reference torque (C_{cons}), wherein the control unit (10) is further configured to calculate a frequency response (K(s)) in accordance with the rotation speed (Ω) of the motor, to add this frequency response to the first reference torque (C_{cons}), and, when the rotation speed (Ω) is lower in terms of absolute value than a first rotation speed threshold, before adding the frequency response, to calculate a corrective increment by applying to the frequency response a multiplication coefficient (G_{NO}) which amplifies the effect of the frequency response (K(s)), **characterised in that**
the multiplication coefficient (G_{NO}) is strictly greater than 1 and increases with the absolute value of the first reference torque (C_{cons}), and the multiplication coefficient is multiplied by a signature value equal to +1 or -1 so that the reference torque increment added to or subtracted from the first reference torque (C_{cons}) tends effectively to accelerate the passage of the rotation speed of the motor through zero.
